# EUROPÄISCHE PATENTSCHRIFT

(11) **EP 2 422 956 B1**
(45) Veröffentlichungstag und Bekanntmachung des Hinweises auf die Patenterteilung: **25.09.2019**
(21) Anmeldenummer: 11174712.7
(22) Anmeldetag: 20.07.2011
(51) Int. Cl.: B29C 49/56

(54) **Blasform**
Blow mould
Moule de soufflage

(30) Priorität: 31.08.2010 DE 102010040004
(43) Veröffentlichungstag der Anmeldung: 29.02.2012
(73) Patentinhaber: Krones AG, 93073 Neutraubling (DE)
(72) Erfinder: Stoiber, Christian, 93185 Michelsneukirchen (DE); Albrecht, Thomas, 92339 Beilngries (DE)
(74) Vertreter: Grünecker Patent- und Rechtsanwälte PartG mbB

(56) Entgegenhaltungen:
- EP-A1- 2 202 047
- EP-A2- 0 712 704
- EP-A2- 2 218 569
- WO-A2-2009/156698
- DE-A1- 3 444 298
- US-A- 354 741
- US-A- 2 361 553
- US-A- 5 472 653
- US-A1- 2010 047 375

## Beschreibung

Die Erfindung betrifft eine Blasform gemäß Oberbegriff des Patentanspruchs 1.

Es ist in der Blasform- oder Streckblasformtechnik üblich, zumindest die die Wandbereiche des Behälters bildenden Formteile (Formhälften) in Formträgerschalen aufzunehmen. Die Formträgerschalen erfüllen in der Regel auch die Funktion einer Temperierung der Blasform. Zu diesem Zweck können in die Formträgerschalen Kanäle eingeformt sein, die von einem Temperiermedium (Wasser, Öl) durchströmt werden. Zum Befestigen der Formträgerschalen ist ein üblicherweise zweiteiliger Formträger vorgesehen, der die Haltefunktion für die Formträgerschalen erbringt und primär dazu dient, die Kräfte beim Blasformvorgang aufzunehmen. Speziell die Aufgabe der Kraftaufnahme erfordert eine außerordentlich stabile Ausführung der Lagerung der Formträgerteile, wobei die Lagerung auch für das Öffnen und Schließen der Blasform dient. Ferner sind meist im vorderen Bereich der Formträgerteile Verriegelungselemente vorgesehen, die wie die Lagerung im hinteren Bereich die Kräfte aus dem Blasformvorgang aufnehmen. Die Formträgerteile sind auch deshalb sehr stabil und damit großbauend auszubilden, da einander überlagernde Zugspannungen und Biegespannungen aufzunehmen sind. Die Blasform kann sich in dieser Ausbildung dennoch gegebenenfalls unter den Kräften minimal verformen. Dies hätte eine sichtbare Trennnaht am hergestellten Behälter zur Folge. Um ein minimales Öffnen der Formteile zu unterbinden, kann eine Formträgerschale in ihrem Formträgerteil schwimmend gelagert sein und durch ein separates Kompensationselement beaufschlagt werden, um die Gesamtverformung zu kompensieren und die Formteile unnachgiebig aneinander zu halten.

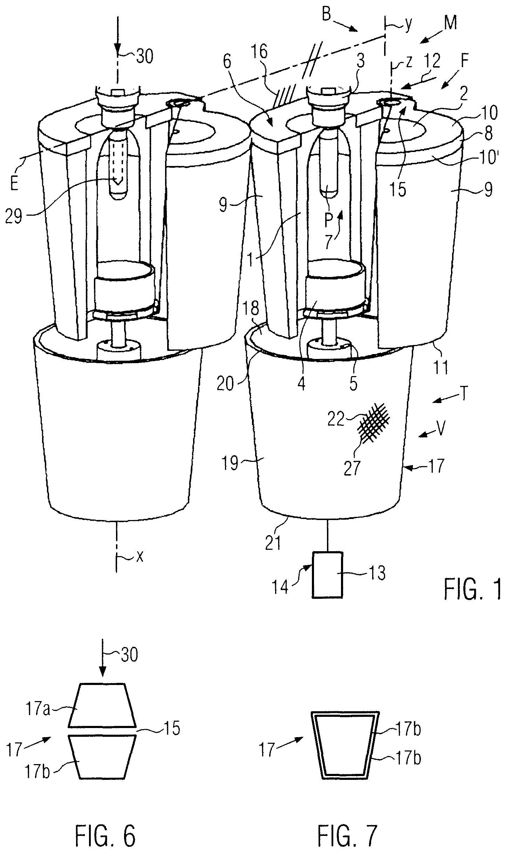

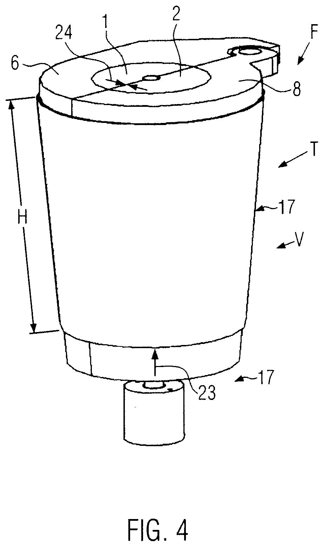

Bei der aus EP-A-2 218 569, die die Merkmale des Oberbegriffs des Anspruchs 1 offenbart, bekannten Blasform umfasst die Verriegelungseinrichtung in Fig. 4b zwei backenförmige Verriegelungsteile an einem Bodenformteil. Die Verriegelungsteile weisen zwei sich in Aufschieberichtung erweiternde Schrägflächen auf. Die Formteile weisen in einem mittleren, axial eng begrenzten Abschnitt zwei diametral gegenüberliegende Schrägflächen auf, auf welche die Schrägflächen der Verriegelungsteile axial durch einen die Bodenform steuernden Zylinder aufgeschoben werden, um die Formteile gegeneinander zu pressen. In der Ausführungsform in Fig. 6g werden konische Flächen an der Bodenform und einer oberseitig applizierten Blasdüse von außen axial auf konische Gegenflächen nur an den oberen und unteren Enden der Formteile aufgepresst.

Aus US-A-5 472 653 ist ein Verfahren zum Herstellen von mit Kohlenstofffasern verstärkten Formteilen als Maschinenteile, Strukturbauteile, oder Bauteile optischer Instrumente bekannt. Die Kohlenstofffasern werden in Form von mit Kunststoff imprägnierten Prepregs verarbeitet und in einer geteilten Form gebacken, die aus einem Formkern aus elastischem Material, wie Silikonkautschuk oder Fluorkautschuk, sowie einer geteilten Außenform aus festem Material, wie z.B. mit Kohlenstofffasern verstärktem Material, besteht. Die geteilte Außenform wird durch eingeschraubte Spannbolzen geschlossen und verriegelt.

Bei der aus US 2010/0047375 A1 bekannten Blasform umfasst die Verriegelungseinrichtung eine an einem Ständer linear verschiebbar geführte Hülse, an deren in Aufschieberichtung auf die Formträgerschalen vorneliegendem Rand ein in Umfangsrichtung geschlossener Kragen montiert ist. Die die Formteile enthaltenden Formträgerschalen sind um eine unterhalb der Blasform liegende, in etwa radial zur Blasrotorachse ausgerichtete Achse schwenkbar und weisen an verstärkten oder mit Versteifungsrippen versehenen Außenwandbereichen bogensegmentartige Bügel auf, die außenseitig konische Pressflächen definieren, auf die der Kragen aufgeschoben wird, um die Blasform zu verriegeln und die Formteile gegen Kräfte aus dem Blasformvorgang abzustützen. Die konischen Pressflächen befinden sich nur in in Richtung der Formhohlraumachse begrenzten Bereichen von Oberteilen der Formträgerschalen, so dass der vom Kragen erzeugte Schließdruck nur in einem sehr begrenzten Bereich auf die Formträgerschalen einwirkt. Da der Schließdruck des Kragens somit lokal und auch in Umfangsrichtung nur begrenzt auf die Formträgerschalen einwirkt, sind die Formträgerschalen oberhalb und unterhalb der konischen Pressflächen verstärkt. Der Bewegungsantrieb der Verriegelungseinrichtung ist kurvengesteuert. Die die Unterteile der Formträgerschalen umgebende, den Kragen tragende Hülse enthält Steuerkulissen, in denen sich Steuernocken der Formträgerschalen bewegen, wenn der Kragen auf die konischen Passflächen aufgeschoben wird. Die Steuernocken steuern das Schließen und Öffnen der Blasform. Die Formteile sind in den Formträgerschalen austauschbar montiert. Im Inneren der den Kragen tragenden Hülse ist eine Bodenform mit ihrem Antriebsmechanismus untergebracht. Aufgrund der erforderlichen Aussteifungen der Formträgerschalen und der aufwändigen Verriegelungseinrichtung sind beim Öffnen und Schließen und Verriegeln große Massen rasch zu bewegen, und sind sehr stark ausgelegte Bewegungsantriebe erforderlich. Da die beiden Formträgerschalen nur in lokal begrenzten Bereichen mit dem Schließdruck des Kragens beaufschlagt werden, besteht die Gefahr, dass unter den aus dem Blasformvorgang resultierenden Kräften unkontrollierbare Verformungen an den Formteilen entstehen, wodurch sich die Formtrennebene zumindest bereichsweise unerwünscht im hergestellten Behälter abzeichnen kann.

EP 1 980 386 A erläutert eine Hilfsverriegelung im oberen Bereich der Blasform über metallische Konusflächen an den Formschalen und einem Konus an der dort angesetzten Blasdüse. Die Formschalen werden weiter unten auch auf herkömmliche Weise verriegelt.

Informationen zu weiterem technologischen Hintergrund sind zu finden in DE-A-34 44 298, US-A-2 361 553, WO-A-2009/156698, US-A-354 741, US-A1-2010/0047375, EP-A-2 202 047 und EP-A-0 712 704.

Der Erfindung liegt die Aufgabe zugrunde, eine Blasform dieser Art dahingehend zu verbessern, dass die Formteile beim Blasformvorgang auf andere Art so verriegelt und abgestützt sind, dass sich eine kompakte Bauweise der Blasform erzielen lässt, geringe Massen schnell zu bewegen sind, auch große Kräfte beim Blasformvorgang vollständig aufgenommen werden und für die Verriegelungsfunktion kleinbauende Bewegungsantriebe einsetzbar sind.

Die gestellte Aufgabe wird mit den Merkmalen des Patentanspruchs 1 gelöst.

Die zumindest eine unter Verwendung hochfesten Fasermaterials hergestellte Verriegelungshülse erbringt bei extrem geringem Gewicht und kompakten Abmessungen extreme Zugfestigkeit und baut den Schließdruck gleichförmig über den gesamten Umfang der Formträgerschalen und im Wesentlichen die gesamte Höhe des Formhohlraums auf. Die Verriegelungshülse benötigt im Vergleich zu bisher bekannten Formträger- und Verriegelungseinrichtungen sehr wenig Bauraum, was wünschenswert eine sehr dichte Anordnung mehrerer Blasstationen auf einem Blasrotor einer Blasmaschine ermöglicht. Aufgrund der geringen Masse der Verriegelungshülse kann ein kleinbauender Bewegungsantrieb mit nur moderater Leistung verwendet werden, was weiterhin Bauraum spart und dennoch schnelle Zykluszeiten gewährleistet. Die zumindest eine Verriegelungshülse wird z.B. ähnlich hergestellt, wie Karosseriebauteile im Automobil-Rennsport und benötigt aufgrund der materialspezifisch hohen Festigkeit nur relativ geringe Wandstärke. Das zur Herstellung der Verriegelungshülse verwendete hochfeste Fasermaterial umfasst zweckmäßig Kohlenstofffasern, die in verschiedensten Spezifikationen handelsüblich und relativ einfach verarbeitbar sind. Alternativ oder additiv können auch andere hochfeste Fasern wie Aramidfasern oder dgl. verwendet werden. Das hochfeste Fasermaterial kann in Gewebeform verarbeitet werden, beispielsweise in Form von Prepregs mit Kunststoffvorimprägnierung. Im fertiggestellten Zustand der Verriegelungshülse ist das hochfeste Fasermaterial in eine Kunststoffmatrix eingebettet, die sehr temperaturfest ist. Die Herstellung kann unter Einwirkung von Temperatur und Druck erfolgen. Vorteilhaft wird die Verriegelungshülse aus Endlosfasern gewickelt.

Dabei ist darauf hinzuweisen, dass die Blasform so ausgelegt sein kann, dass sich die Formträgerschalen in der Formtrennebene symmetrisch öffnen lassen oder eine Formträgerschale feststehend und die andere aufklappbar oder linear von der Formtrennebene wegbewegbar ist. Die Verriegelungshülse hat zum Sicherstellen einer Spielfreiheit zumindest die konische Innenwand. Dabei kann die Außenwand der Verriegelungshülse zylindrisch sein oder ebenfalls konisch, gegebenenfalls konisch derart, dass die Wandstärke am großdurchmessrigen Ende der Verriegelungshülse größer ist als am kleindurchmessrigen Ende. Ferner könnte die Verriegelungshülse innen und/oder außen verstärkende Umfangsstrukturen, wie z.B. Rippen aufweisen. Auch innere Langrippen oder ein Rippennetzwerk sind denkbar, um zu verstärken und/oder die Kontaktfläche zu verringern. Die Blasform kann als Formteil auch eine separate, verstellbare Bodenform umfassen, die bei geschlossener Blasform mit den die Wandbereiche des Behälters ausbildenden anderen Formteilen verriegelt ist.

Bei einer zweckmäßigen Ausführungsform werden mehr als nur eine Verriegelungshülse auf die Formträgerschalen aufgeschoben. Beispielsweise werden die mehreren Verriegelungshülsen von einem Ende der Formträgerschalen her nacheinander aufgeschoben, bis sie mit ihrem Enden nahezu aneinander anschließen oder vollständig aneinanderstoßen oder einander sogar teilweise überlappen. Alternativ könnte eine Verriegelungshülse von einem Ende her und die andere Verriegelungshülse vom gegenüberliegenden Ende der Formträgerschalen her aufgeschoben werden, die dann gegensinnig konische Außenseitenbereiche haben. In jedem Fall wird gewährleistet, dass über die Anzugsspannung der zusammenwirkenden konischen Flächenbereiche der Schließdruck gleichmäßig und hoch und um den gesamten Umfang der Formträgerschalen generiert und unnachgiebig gehalten wird.

Bei einer besonders zweckmäßigen Ausführungsform ist die Verriegelungshülse doppelwandig ausgebildet, wobei eine Wand, vorzugsweise die innere Wand, ein Kompensationselement und/oder Temperierelement in der Blasform bildet. Das Kompensationselement unterdrückt minimale Verformungen der Formteile unter den Kräften aus dem Blasformvorgang. Das Temperierelement trägt zum Temperieren der Blasform bzw. der Formteile bei.

Bei einer anderen zweckmäßigen Ausführungsform ist in wenigstens einer außenseitigen Vertiefung zumindest einer Formträgerschale ein Druckkissen vorgesehen, beispielsweise in Form eines mit einem Druckfluid gefüllten Beutels aus elastischem oder viskosem Material. Alternativ könnte eine Art Druckkissen nach Aufschieben der Verriegelungshülse so gebildet werden, dass eine die außenseitige Vertiefung umrahmende Dichtung mit der Innenwand der Verriegelungshülse in abdichtende Anlage gebracht wird und z.B. ein Kompensationsmedium von außen unter Druck eingeführt wird.

Zwischen den Wänden der doppelwandigen Verriegelungshülse kann eine mit einem Kompensations- und/oder Temperiermedium wie Druckluft, Öl oder Wasser gefüllte oder füllbare Drucckammer vorgesehen sein, vorzugsweise sogar ein Druckkissen aus elastischem und/oder flexiblem Material im Falle der Verwendung der Druckkammer als Kompensationselement. Bei einer weiteren zweckmäßigen Ausführungsform wird das Phänomen des negativen Wärmeausdehnungskoeffizienten von Kohlenstofffasern genutzt, und deren elektrische Leitfähigkeit, um durch elektrische Beheizung entweder eine Kompensationswirkung zu erzeugen und/oder die Blasform zu temperieren. Die Kompensationswirkung wird beispielsweise dann erzeugt, wenn zuvor die Verriegelungshülse bereits ausreichend fest aufgeschoben ist und einen grundsätzlichen Schließdruck erzeugt, um dann noch den Schließdruck zusätzlich zu erhöhen und zu halten, ohne über den Bewegungsantrieb der Verriegelungshülse hohe lineare Kräfte aufbringen zu müssen.

Bei einer zweckmäßigen Ausführungsform ist der Blasform eine linear in den und aus dem Formhohlraum bewegbare Reckstange funktionell zugeordnet. Mittels eines Bewegungsantriebs der Reckstange kann auch die wenigstens eine von der Reckstange zugewandten Ende auf die Formträgerschalen aufschiebbare Verriegelungshülse antreibbar sein. Der Bewegungsantrieb der Reckstange erfüllt somit universell eine Mehrfachfunktion.

Besonders zweckmäßig wird zum Bewegen der wenigstens einen Verriegelungshülse in und gegen die Aufschieberichtung ein elektrischer Linearmotor vorgesehen. Dieser Linearmotor kann relativ klein bauen, da nur kleine Massen schnell zu bewegen sind und das mechanische Zusammenspiel zwischen den konischen Flächen ohne exzessiven Kraftaufwand generierbar ist. Der elektrische Linearmotor ermöglicht ferner eine exakt reproduzierbare und überwachbare Positionierung der Verriegelungshülse.

Ein weiterer, zweckmäßiger Gedanke liegt darin, die konischen Außenflächenbereiche der Formträgerschalen und die Verriegelungshülsen so auszulegen und aufeinander abzustimmen, dass die Verriegelungshülsen beim Abziehen teleskopartig ineinanderschachtelbar sind, um vor allem in Bewegungsrichtung Bauraum einzusparen. Gegebenenfalls weisen die Formträgerschalen abgestufte konische Außenflächenbereiche auf, damit die Verriegelungshülsen das Teleskopieren ermöglichende, deutlich unterschiedliche Durchmesser haben können.

Bei einer Blasmaschine mit einem Blasrotor, der mehrere Blasformen trägt, kann die jeweilige Formtrennebene zweckmäßig radial zur Blasrotorachse orientiert sein. Um den gegebenen Bauraum im Blasrotor oder in dessen Umfangsbereich besser nutzen zu können, kann es alternativ zweckmäßig sein, die Formtrennebene unter einem Winkel gegenüber einer radialen Ausrichtung schräg anzustellen, und zwar entweder in die oder gegen die Blasrotor-Drehrichtung.

Zweckmäßig sind die Formträgerschalen an einer scherenartigen fliegenden Aufhängung mit einer Lagerung zur Formöffnung und Formschließung angeordnet, damit die zumindest eine Verriegelungshülse wie erforderlich weit genug aufgeschoben werden kann. Da die mindestens eine Verriegelungshülse eine Formträgerfunktion übernimmt und die Kräfte aus dem Blasformvorgang aufnimmt, sind die Aufhängung und die Lagerung gegenüber diesen Kräften entlastet, so dass sie relativ einfach und platzsparend ausgelegt werden können. Zweckmäßig befindet sich die Aufhängung mit der Lagerung am in Aufschieberichtung der Verriegelungshülse hintenliegenden Ende der Formträgerschalen. Auf diese Weise wird eine Kollision zwischen der aufgeschobenen Verriegelungshülse und der Aufhängung vermieden. Werden hingegen von den gegenüberliegenden Enden der Formträgerschalen Verriegelungshülsen aufgeschoben, dann kann die Aufhängung in etwa im Mittelbereich der Formträgerschalen angeordnet sein, so dass sie bei aufgeschobenen Verriegelungshülsen dazwischen liegt.

Bei einer zweckmäßigen Ausführungsform ist eine Formträgerschale, vorzugsweise eine feststehende Formträgerschale, schwimmend an der Aufhängung gelagert. Die Lagerung zur Formöffnung und Formschließung ist mit einem Schließbewegungsantrieb, vorzugsweise einem kurvengesteuerten, einem hydraulischen, einem pneumatischen oder einem motorischen Antrieb, funktionell so verbunden, dass die Formteile ohne gegenseitigen Anschlag bis auf einen Zwischenabstand zunächst schließbar sind, und erst entweder über ein Kompensationselement und/oder das Aufschieben der Verriegelungshülse mit Schließdruck auf Anschlag gebracht werden. Hierfür lässt sich der begrenzte Freiheitsgrad der schwimmend gelagerten Formträgerschale nutzen. Der Zwischenabstand kann beispielsweise zwischen nur 0,1 mm bis 0,3 mm betragen, um einen frühzeitigen Verschleiß durch Anschlagen der Formteile und gegebenenfalls der Formträgerschalen zu vermeiden. Dieses Spaltmaß kann dann durch das Kompensationselement hydraulisch oder pneumatisch geschlossen werden, und/oder durch die aufgeschobene Verriegelungshülse, in jedem Fall aber schonend für die Formteile. Alternativ kann die Bewegung der Formträgerschalen mit der Bewegung der Verriegelungshülse gekoppelt erfolgen, z.B. so, dass die verfahrende Verriegelungshülse die Formträgerschalen zueinander bringt.

Ein wichtiger Gedanke bei einer zweckmäßigen Ausführungsform besteht darin, dass die mindestens eine aufgeschobene Verriegelungshülse gleichzeitig die Formträgerfunktion und die Verriegelungsfunktion der Blasform erbringt, d.h., einen baulich aufwändigen und Bauraum beanspruchenden Formträger einsparen lässt.

Ferner kann es zweckmäßig sein, dass jede Formträgerschale mit dem Formteil vereinigt, vorzugsweise einstückig ausgebildet ist. Dabei kann die Temperierung der Formteile beispielsweise über einen Mediumanschluss an der Formträgerschale und/oder dem Formteil durchgeführt werden. Dies spart weiteren Bauraum und ermöglicht eine einfache Herstellung der Formträgerschalen mit den Formteilen.

Bei einer taktweise betriebenen Blasmaschine kann die wenigstens eine Verriegelungshülse auch bei einer linearen Anordnung verwendet werden.

Anhand der Zeichnungen werden Ausführungsformen des Erfindungsgegenstandes erläutert. Es zeigen:
- Fig. 1: eine Perspektiv-Schemadarstellung von Hauptkomponenten zweier beispielsweise an einem Blasrotor einer Blasmaschine angeordneter Blasformen in geöffnetem Zustand,
- Fig. 2: eine Perspektivdarstellung von Hauptkomponenten einer Blasform, in geschlossenem, nicht verriegeltem Zustand,
- Fig. 3: die Hauptkomponenten der Blasform von Fig. 2 beim Verriegelungsvorgang,
- Fig. 4: die Hauptkomponenten der Blasform in verriegeltem Zustand,
- Fig. 5: einen Achsschnitt zu Fig. 4, wobei Detailvarianten angedeutet sind,
- Fig. 6: eine Schemadarstellung einer weiteren Detailvariante, und
- Fig. 7: eine Schemadarstellung einer weiteren Detailvariante.

Fig. 1 zeigt an benachbarten Blasstationen eines Blasrotors B einer Blasmaschine M vorgesehene geöffnete Blasformen F. Der Blasrotor B ist um eine Blasrotorachse Y drehantreibbar. Die Blasformen F weisen Formtrennebenen E auf, die in der gezeigten Ausführungsform radial zur Blasrotorachse Y angeordnet sind. Jede Blasform hat eine Blasformachse X. Alternativ könnten die Blasformen in stationären Blasstationen einer Blasmaschine verwendet werden. Jede Blasform F dient beispielsweise zum Herstellen von Behältern aus Preforms P, beispielsweise Kunststoff-Flaschen durch einen Blasvorgang oder einen Streckblasvorgang, wobei eine geöffnete Blasform mit einem Preform P beladen, geschlossen und verriegelt wird, ehe der Blasformvorgang abläuft, und dann geöffnet wird, um den produzierten Behälter entnehmen zu können.

In der gezeigten Ausführungsform weist die Blasform Formteile 1, 2 hauptsächlich zur Behälterwandformung und einen Formteil 4 als Bodenform zur Bodenformung auf. Die Formteile 1, 2 sind Formschalen und in Formträgerschalen 6, 8 untergebracht, vorzugsweise mit diesen einstückig ausgebildet. Die Formteile 1, 2 werden in der Formtrennebene E gefügt und mit dem Formteil 4 verriegelt und definieren einen Formhohlraum 7. Blasluft wird in den Preform P über eine Blasdüseneinrichtung 3 appliziert, die im gezeigten Ausführungsbeispiel von oben an die geschlossene und verriegelte Blasform F angesetzt wird. Bei einem Streckblasformvorgang wird eine in Fig. 1 gestrichelt angedeutete Reckstange 29 mittels eines Reckstangenantriebs 30 in den Formhohlraum 7 eingeführt.

Jede Formträgerschale 6, 8 besitzt einen konischen Außenwandbereich 9, der sich im Wesentlichen über die gesamte Höhe der Formträgerschalen 6, 8 erstreckt, d.h. zwischen einem oberen Ende 10 und einem unteren Ende 11. Die konischen Außenwandbereiche 9 könnten auch durch die Hüllkurve von Rippen oder Vorsprüngen definiert sein, bzw. brauchen nicht notwendigerweise die gesamte Außenoberfläche der Formträgerschalen zu bedecken. Beispielsweise ist am oberen Ende jeder Formträgerschale 6, 8 ein Montagering 10' vorgesehen, der zum Haltern der Formträgerschalen 6, 8 an einer im gezeigten Ausführungsfall nur am oberen Ende 10 vorgesehenen, fliegenden Aufhängung 15 mit einer Schwenkachse Z für die relativen Öffnungs- und Schließbewegungen der Formträgerschalen 6, 8 dient.

Der Aufhängung 15 ist eine im Detail nicht gezeigte Lagerung zum Öffnen und Schließen der Formträgerschalen 6, 8 über einen Bewegungsantrieb 12 zugeordnet. Im gezeigten Ausführungsbeispiel kann die Formträgerschale 6 eine feststehende Formträgerschale sein, die an einer Abstützung 16 abgestützt ist. Die Formträgerschale 8 ist um die Schwenkachse Z aufklappbar, oder, nicht gezeigt, linear von der Formtrennebene E wegbewegbar. Die Formträgerschale 6 kann ferner in der Aufhängung 15 schwimmend gelagert sein, d.h. einen gewissen Bewegungsspielraum relativ zur Aufhängung 15 (und zur Abstützung 16) besitzen.

Alternativ wäre denkbar, beide Formträgerschalen 6, 8 beweglich zu lagern, und somit bezüglich der in Fig. 1 gezeigten z-Achse zu schwenken.

Der Formteil 4, d.h. die Bodenform, ist mittels eines Bewegungsantriebs 5 zumindest anhebbar und absenkbar, und zwar zweckmäßigerweise in Richtung der Blasformachse X.

Die Blasform in Fig. 1 weist ferner eine Verriegelungseinrichtung V mit einer Verriegelungshülse 17 auf, die über einen Bewegungsantrieb 13, beispielsweise einen elektrischen Linearmotor 14, aus der gezeigten abgesenkten Stellung in Richtung der Achse X nach oben verfahrbar ist. Die Verriegelungshülse 17 ist unter Verwendung hochfestem Fasermaterials 27, eingebettet in eine Kunststoffmatrix 22, hergestellt. Das hochfeste Fasermaterial 27 umfasst zweckmäßig Kohlenstofffasern oder gleichwertige hochfeste Fasern wie Aramidfasern oder dgl.. Die Verriegelungshülse 17 ist in Umfangsrichtung vollständig geschlossen und besitzt zumindest ein oberes offenes Ende 20 und eine konische Innenwand 18 passend zu den konischen Außenseitenbereichen 9 der Formträgerschalen 6, 8. Ein unteres Ende 21 der Verriegelungshülse 17 kann offen sein, oder einen nicht dargestellten Boden aufweisen, der, zweckmäßig, einen Durchgang für den Bewegungsantrieb 5 des Formteils 4 aufweist. Die Außenumfangswand 19 der Verriegelungshülse 17 kann zylindrisch sein oder, wie gezeigt, konisch und entweder parallel zur konischen Innenwand 18 oder derart, dass die Wandstärke der Verriegelungshülse 17 beispielsweise zur oberen Öffnung 20 hin zunimmt. Die Wandstärke der Verriegelungshülse 17 braucht nur einige Millimeter zu betragen. Die Konuswinkel der konischen Außenseitenbereiche 9 und der konischen Innenwand 18 stimmen zumindest weitestgehend überein. Die Verriegelungshülse 17 dient zum Verriegeln der geschlossenen Formträgerschalen 6, 8 und zum Erzeugen und Halten eines allseitigen Schließdrucks für die Formträgerschalen 6, 8 und die Formteile 1, 2, mit denen für einen Blasformvorgang der Formteil 4 verriegelt ist. Dadurch übernimmt die Verriegelungshülse 17 sowohl eine Verriegelungsfunktion für die Blasform F als auch eine Formträgerfunktion T. Alternativ könnte die mit kreisrundem Querschnitt gezeigte Verriegelungshülse 17 einen ovalen oder anderen Querschnitt besitzen, passend zu den entsprechend gestalteten Formträgerschalen 6, 8.

In Fig. 1 ist jeder Blasform F eine einzige Verriegelungshülse 17 zugeordnet, deren in Richtung der Achse X gesehene Höhe im Wesentlichen der Höhe des Formhohlraums 7 bzw. der Formträgerschalen 6, 8 entspricht. Alternativ könnte anstelle einer einzigen Verriegelungshülse 17 mehr als eine Verriegelungshülse 17 vorgesehen sein, beispielsweise wie in Fig. 7 angedeutet, zwei unterschiedlich große Verriegelungshülsen 17a, 17b, die nacheinander aufgeschoben werden und in aufgeschobenem Zustand entweder nahe aneinander anschließen oder direkt aneinanderstoßen oder sich zumindest teilweise überlappen. In abgezogenem Zustand (Fig. 7) können die mehreren Verriegelungshülsen 17a, 17b teleskopartig ineinandergeschachtelt sein, um Bauraum in Richtung der Achse X einzusparen. Alternativ könnten auch mehr als zwei Verriegelungshülsen 17a, 17b zum Einsatz gebracht werden.

Fig. 6 deutet in Verbindung mit Fig. 1 eine weitere Detailvariante an, bei der zwei gegensinnig konische Verriegelungshülsen 17a, 17b anstelle der Verriegelungshülse 17 von Fig. 1 zum Einsatz gebracht werden, die von den gegenüberliegenden Enden 10, 11 der Formträgerschalen 6, 8 auf diese aufgeschoben werden, wobei dann die konischen Außenseitenbereiche 9 der Formträgerschalen 6, 8 entsprechend gegensinnig konisch ausgebildet werden. Falls ein Reckstangenantrieb 30 vorgesehen ist, könnte dieser in Fig. 6 zum Verschieben der oberen Verriegelungshülse 17a benutzt werden.

In Fig. 6 liegen die aufgeschobenen Verriegelungshülsen 17a, 17b beispielsweise nicht direkt aneinander an, sondern wird dazwischen ein Abstand belassen, innerhalb dessen die dann in einem mittleren Bereich der Formträgerschalen 6, 8 platzierte Aufhängung 15 angeordnet werden kann. Gegebenenfalls weisen in Fig. 6 die Verriegelungshülsen 17a, 17b an ihren zueinander weisenden Öffnungen Ausschnitte für die Aufhängung 15 auf, so dass die Verriegelungshülsen 17a, 17b weiter zueinander aufgeschoben werden können, als in Fig. 6 gezeigt.

Bei einer nicht gezeigten Alternative könnten die beiden Formträgerschalen 6, 8 von Fig. 1 auch symmetrisch in der Aufhängung 15 scherenartig auf- und zugeklappt werden.

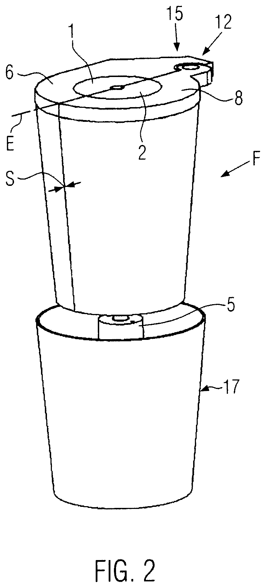

In Fig. 2 sind die Formträgerschalen 6, 8 in einer Schließstellung gezeigt, die beispielsweise an der Aufhängung 15 über die Lagerung zum Öffnen und Schließen der Blasform und den Bewegungsantrieb 12 so eingestellt ist, dass in der Formtrennebene E noch ein Spaltmaß S von beispielsweise 0,1 mm bis 0,3 mm zwischen den Formträgerschalen 6, 8 und/oder den Formteilen 1, 2 bleibt, und diese nicht hart aneinander anschlagen. Der Bewegungsantrieb 5 hat den Formteil 4 hochgeschoben, der mit den Formteilen 1, 2 verriegelt ist. Die Verriegelungshülse 17 befindet sich noch in der in Fig. 1 gezeigten Stellung, und ist noch nicht aufgeschoben. Die Blasform F ist somit noch nicht verriegelt.

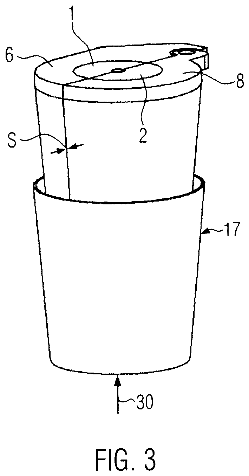

In Fig. 3 wird die Verriegelungshülse 17 in Richtung des Pfeiles 23 linear (in Richtung der Achse X) nach oben geschoben, wobei das Spaltmaß S noch vorliegt.

In Fig. 4 ist die Verriegelungshülse 17 vollständig nach oben geschoben (Pfeil 23), derart, dass sie über im Wesentlichen die gesamte Höhe H des Formhohlraums 7 bzw. der Formträgerschalen 6, 8 über den gesamten Umfang wirkt. Die Blasform F ist in verriegeltem Zustand. Die Formteile 1, 2 sind (Pfeile 24) vollständig gegeneinander gepresst, so dass das Spaltmaß S der vorhergehenden Figuren aufgehoben ist. Die Verriegelungshülse 17 fungiert in dieser Phase als Formträger mit der Formträgerfunktion T der Blasform F. Das Spaltmaß S kann hierbei entweder durch die Aufschiebebewegung und die in Richtung des Pfeiles 23 wirkende Axialkraft über die Konizität aufgehoben worden sein, und/oder durch ein nicht gezeigtes Kompensationselement, das pneumatisch oder hydraulisch den endgültigen Schließdruck erzeugt. Die Blasform F ist in Fig. 4 zum Durchführen des Blasformvorgangs bereit.

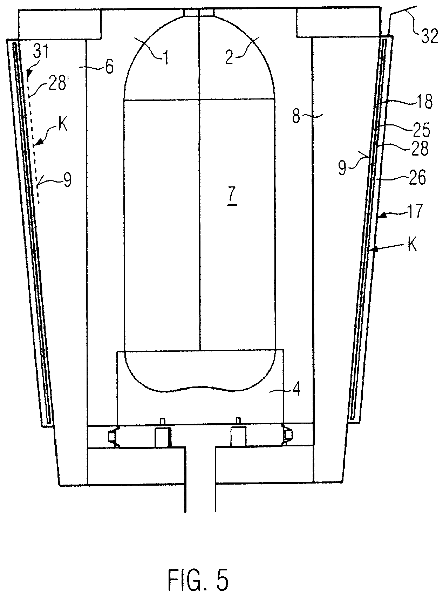

Fig. 5 zeigt in einem Achsschnitt, wie die aufgeschobene Verriegelungshülse 17 über im Wesentlichen die gesamte Höhe der Formträgerschalen 6, 8 bzw. der Formteile 1, 2 bzw. des Formhohlraums 7 wirksam ist. Ferner verdeutlicht Fig. 5 Detailvarianten der Blasform, bei denen z.B. zumindest ein Kompensationselement K zum Einsatz kommt.

In der rechten Hälfte von Fig. 5 ist die Verriegelungshülse 17, insbesondere über den kompletten Umfang, doppelwandig ausgebildet, derart, dass zwischen einer inneren Wand 25, die die konische Innenwand 18 zusammenwirkend mit dem konischen Außenseitenbereich 19 definiert, und einer äußeren Wand 26, eine Druckkammer 28 gebildet ist. Diese Druckkammer 28 ist beispielsweise ausgekleidet mit einem Beutel aus flexiblem und/oder elastischem Material und enthält ein Druckfluid (Druckluft, Wasser, Öl), das unter Druck setzbar ist, so dass die innere Wand 25 als membranartiges Kompensationselement fungiert.

Das Bezugszeichen 32 versinnbildlicht als weitere Detailvariante einen elektrischen Anschluss zum Beheizen der Verriegelungshülse 17, beispielsweise falls diese unter Verwendung von Kohlenstofffasern hergestellt ist, deren Leitfähigkeit über den elektrischen Widerstand die Beheizung der Verriegelungshülse 17 ermöglicht. Da Kohlenstofffasern das Phänomen eines negativen Wärmeausdehnungskoeffizienten zeigen, schrumpft die Verriegelungshülse 17 mit zunehmender Temperatur, um dann als Kompensationselement K zu wirken. Alternativ oder additiv kann die elektrische Beheizung der Verriegelungshülse 17 zum Temperieren der Formträgerschalen 6, 8 bzw. indirekt der Formteile 1, 2 benutzt werden. In den Formträgerschalen 6, 8 (und/oder den Formteilen 1, 2) könnten ferner Kanäle vorgesehen sein, die von einem Temperiermedium durchflossen sind.

In der linken Hälfte von Fig. 5 ist eine andere Art eines Kompensationselementes K angedeutet. In dem konischen Außenseitenbereich 9 der Formträgerschale 6 ist beispielsweise eine nach außen offene Ausnehmung 28' geformt, die randseitig durch eine Dichtung 31 umfasst wird, welche mit der Verriegelungshülse 17 und deren konischer Innenwand 18 eine Druckkammer begrenzt, die mit einem Druckmedium zur Kompensation beaufschlagbar ist. Anstelle der Dichtung 31 könnte auch, ähnlich wie in der rechten Hälfte von Fig. 5, ein Beutel aus elastischem und/oder flexiblem Material eingelegt sein.

Im Kern werden die üblichen getrennten Formträgerteile durch eine oder mehrere Verriegelungshülsen ersetzt, die unter Verwendung hochfesten Fasermaterials, insbesondere Kohlenstofffasern, hergestellt sind. Die Verriegelungshülse zeichnet sich bei geringem Gewicht und kleinen Abmessungen durch extrem hohe Festigkeit aus und ermöglicht schnelle Verfahrbewegungen geringer bewegter Massen. Falls eine Kompensationsfunktion benötigt wird, kann die Verriegelungshülse mehrlagig oder doppelwandig ausgebildet sein. Die innere Wand erbringt dann die Funktion einer Membrane, die druckbeaufschlagt wird. Auf diese Weise wird eine Funktion eines hydraulischen Spannsatzes erzeugt. Die Verriegelungshülse beansprucht im Vergleich zu bekannten Formträger- und Verriegelungssystemen extrem geringen Bauraum, was eine sehr kompakte Anordnung von Blasstationen, beispielsweise auf einem Blasrad, ermöglicht. Die aufgrund der hochfesten Fasern erzielbare Festigkeit der mindestens einen Verriegelungshülse ermöglicht die Aufnahme von Kräften aus dem Blasformvorgang (mit einem Druck von beispielsweise etwa 40 x 10⁵ Pa), was es grundsätzlich erlaubt, auf ein Druckkissen als Kompensationselement zu verzichten. Anderenfalls kann die Verriegelungshülse auch zur Integration eines Druckkissens gestaltet werden, falls ein Kompensationselement als zweckmäßig angesehen werden sollte. Die Verriegelungshülse ist zweckmäßig aus Endlosfasern gewickelt.

## Patentansprüche

1. Blasform (F) zum Herstellen von blas- oder streckblasgeformten Behältern aus Preforms (P) in einer, gegebenenfalls einen Blasrotor (B) mit mehreren Blasformen (F) umfassenden, Blasmaschine (M), wobei die Blasform (F) mindestens aufweist: zumindest zwei bei geschlossener und verriegelter Blasform einen Formhohlraum (7) definierende Formteile (1, 2, 4), die Formteile (1, 2) enthaltende Formträgerschalen (6, 8), einen Formträger (T) zum Haltern der Formträgerschalen (6, 8), Bewegungsantriebe (12, 13, 5) zum Öffnen, Schließen und Verriegeln der Blasform (F), und eine zumindest in Richtung der Formhohlraumachse (X) relativ zu den Formträgerschalen (6, 8) verstellbare Verriegelungseinrichtung (V) zum Verriegeln der geschlossenen Blasform (F) und zum Abstützen der Formteile (1, 2, 4) gegen Kräfte aus dem Blasformvorgang, **dadurch gekennzeichnet, dass** die Verriegelungseinrichtung (V) wenigstens eine unter Verwendung von Kohlenstofffasern und/oder Aramidfasern in einer die Fasern einbettenden Kunststoffmatrix unter Druck- und Temperatureinfluss durch Wickeln von Endlosfasern oder aus Fasermaterial in Gewebeform hergestellte Verriegelungshülse (17, 17a, 17b) mit konischer Innenwand (18) umfasst, die mit der Innenwand (18) auf konische Außenflächenbereiche (9) der Formträgerschalen (6, 8) aufschiebbar ist und die Formteile (1, 2) über im Wesentlichen die volle Höhe (H) des Formhohlraums (7) abstützt.

2. Blasform nach Anspruch 1, **dadurch gekennzeichnet, dass** mehr als eine Verriegelungshülse (17a, 17b) von einem Ende (10 oder 11) oder von den gegenüberliegenden Enden (10, 11) der Formträgerschalen (6, 8) aufschiebbar ist, bis die Verriegelungshülsen (17a, 17b) nahezu aneinander anschließen oder aneinanderstoßen oder einander teilweise überlappen.

3. Blasform nach wenigstens einem der vorhergehenden Ansprüche, **dadurch gekennzeichnet, dass** die Verriegelungshülse (17) vollumfänglich doppelwandig ausgebildet ist, wobei eine Wand (25) ein Kompensationselement (K) und/oder Temperierelement für die Blasform (F) bildet.

4. Blasform nach Anspruch 3, **dadurch gekennzeichnet, dass** zwischen den Wänden (25, 26) der Verriegelungshülse (17) eine mit einem Kompensations- und/oder Temperiermedium wie Druckluft, Öl oder Wasser gefüllte oder von außen beaufschlagbare Druckkammer (28) vorgesehen ist, vorzugsweise mit einem eingelegten Druckkissen aus elastischem und/oder flexiblem Material.

5. Blasform nach wenigstens einem der vorhergehenden Ansprüche, **dadurch gekennzeichnet, dass** in wenigstens einer außenseitigen Vertiefung (28') zumindest einer Formträgerschale (6) ein Druckkissen entweder in Form eines mit einem Kompensationsmedium gefüllten Beutels vorgesehen ist oder durch eine an der Innenwand (18) der aufgeschobenen Verriegelungshülse (17) anliegende Dichtung (31) begrenzt wird und von außen mit einem Kompensationsmedium beaufschlagbar ist.

6. Blasform nach wenigstens einem der vorhergehenden Ansprüche, **dadurch gekennzeichnet, dass** die unter Verwendung von Kohlenstofffasern hergestellte Verriegelungshülse (17) elektrisch beheizbar ist und ein Formtemperierelement und/oder aufgrund eines negativen Wärmeausdehnungskoeffizienten ein Kompensationselement (K) der verriegelten Blasform (F) bildet.

7. Blasform nach wenigstens einem der vorhergehenden Ansprüche, **dadurch gekennzeichnet, dass** der Blasform (F) eine linear in den und aus dem Formhohlraum (7) bewegbare Reckstange (29) funktionell zugeordnet ist, und dass mittels eines Bewegungsantriebes (30) der Reckstange (29) auch die wenigstens eine vom der Reckstange (29) zugewandten Ende (10) auf die vom Trägerschalen (6, 8) aufschiebbare Verriegelungshülse (17, 17a) antreibbar ist.

8. Blasform nach Anspruch 1, **dadurch gekennzeichnet, dass** der Bewegungsantrieb (13) der wenigstens einen Verriegelungshülse (17) einen elektrischen Linearmotor (14) aufweist.

9. Blasform nach Anspruch 2, **dadurch gekennzeichnet, dass** die konischen Außenflächenbereiche (9) der Formträgerschalen (6, 8) und die Verriegelungshülsen (17a, 17b) so ausgelegt und aufeinander abgestimmt sind, dass die Verriegelungshülsen (17a, 17b) beim Abziehen von den Formträgerschalen (6, 8) teleskopartig ineinander schachtelbar sind.

10. Blasform nach Anspruch 1, **dadurch gekennzeichnet, dass** eine Formtrennebene (E) zwischen den Formteilen (1, 2) entweder radial zur Blasrotorachse (Y) oder unter einem Winkel gegenüber einer radialen Ausrichtung schräg in die oder gegen die Blasrotordrehrichtung gestellt ist, oder, vorzugsweise, in einer taktweise betreibbaren Blasmaschine (M), eine lineare Anordnung vorgesehen ist.

11. Blasform nach wenigstens einem der vorhergehenden Ansprüche, **dadurch gekennzeichnet, dass** die Formträgerschalen (6, 8) an einer scherenartigen, fliegenden Aufhängung (15) mit einer Lagerung zur Formöffnung und Formschließung angeordnet sind, die über die aufgeschobene Verriegelungshülse (17) gegenüber Kräften aus dem Blasformvorgang entlastbar ist, und dass die Aufhängung (15) entweder am in Aufschieberichtung der Verriegelungshülse (17) hintenliegenden Ende (10) der Formträgerschalen (6, 8) oder bei von den gegenüberliegenden Enden (10, 11) aufschiebbaren Verriegelungshülsen (17a, 17b) in einem Mittelbereich der Formträgerschalen (6, 8) angeordnet ist.

12. Blasform nach Anspruch 11, **dadurch gekennzeichnet, dass** eine Formträgerschale (6) schwimmend an der Aufhängung (15) gelagert ist, und dass die Lagerung zur Formöffnung und Formschließung mit einem Schließbewegungsantrieb (12), vorzugsweise einem kurvengesteuerten, hydraulischen, pneumatischen oder motorischen Bewegungsantrieb (14), funktionell derart verbunden ist, dass die Formteile (1, 2) ohne gegenseitigen Anschlag bis auf einen Zwischenabstand (s) schließbar sind, und erst über ein Kompensationselement und/oder die aufgeschobene Verriegelungshülse (17) mit Schließdruck auf Anschlag bringbar sind.

13. Blasform nach wenigstens einem der vorhergehenden Ansprüche, **dadurch gekennzeichnet, dass** die mindestens eine aufgeschobene Verriegelungshülse (17, 17a, 17b) gleichzeitig die Formträgerfunktion und die Verriegelungsfunktion der Blasform (F) erbringt.

14. Blasform nach wenigstens einem der vorhergehenden Ansprüche, **dadurch gekennzeichnet, dass** jede Formträgerschale (6, 8) mit einem Formteil (1, 2) vereinigt, vorzugsweise einstückig ausgebildet, ist.

## Claims

1. Blow mould (F) for manufacturing blow moulded or stretch-blow moulded containers from preforms (P) in a blow moulding machine (M) optionally comprising a blow rotor (B) with several blow moulds (F), the blow mould (F) at least comprising: at least two mould parts (1, 2, 4) defining a mould cavity (7) when the blow mould is closed, mould support shells (6, 8) containing the mould parts (1, 2), a mould support (T) for holding the mould support shells (6, 8), motion drives (12, 13, 5) for opening, closing and locking the blow mould (F), and a locking means (V) adjustable at least in the direction of the mould cavity axis (X) relative to the mould support shells (6, 8) for locking the closed blow mould (F) and for supporting the mould parts (1, 2, 4) against forces from the blow moulding process, **characterized in that** the locking means (V) comprises at least one locking sleeve (17) manufactured under the influence of pressure and temperature using carbon fibers and/or aramid fibers and a plastic matrix embedding the fibers with a conical inner wall (18) which locking sleeve (17) can be slid with the inner wall (18) onto conical outer surface areas (9) of the mould support shells (6, 8) and supports the mould parts (1, 2) across essentially the complete height (H) of the mould cavity (7) of the blow mould (F).

2. Blow mould according to claim 1, **characterized in that** more than one locking sleeve (17, 17a, 17b) can be slid from one end (10, 11) or from the opposite ends (10, 11) of the mould support shells (6, 8) until the locking sleeves (17a, 17b) nearly contact each other or abut against each other or partially overlap each other.

3. Blow mould according to at least one of the preceding claims, **characterized in that** the locking sleeve (17) is designed double-walled around its complete periphery, wherein one wall (25) forms a compensation element (K) and/or a tempering element for the blow mould (F).

4. Blow mould according to claim 3, **characterized in that** a pressure chamber (28) that can be filled with a compensation and/or tempering, such as pressurized air, oil or water, or that can be actuated upon from outside with said medium, is provided between the walls (25, 26) of the locking sleeve (17), preferably with an inserted pressure pad of an elastic and/or flexible material.

5. Blow mould according to at least one of the preceding claims, **characterized in that** a pressure pad is either provided in at least one outside depression (28') of at least one mould support shell (6) in the form of a bag filled with a compensation medium, or is limited by a seal (31) lying against the inner wall (18) of the slid-on locking sleeve (17) and can be actuated upon from outside by a compensation medium.

6. Blow mould according to at least one of the preceding claims, **characterized in that** the locking sleeve (17) manufactured using carbon fibers can be electrically heated and forms a mould tempering element and/or, due to a negative thermal expansion coefficient, a compensation element (K) of the locked blow mould (F).

7. Blow mould according to at least one of the preceding claims, **characterized in that** a stretching rod (29) that can be linearly moved into and out of the mould cavity (7) is functionally associated to the blow mould (F), and that by means of a motion drive (30) of the stretching rod (29), also the at least one locking sleeve (17, 17a) can be driven to slide on from the end (10) of the support shells (6, 8) facing the stretching rod (29).

8. Blow mould 1 according to claim 1, **characterized in that** the motion drive (13) of the at least one locking sleeve (17) comprises an electric linear motor (14).

9. Blow mould according to claim 2, **characterized in that** the conical outer surface areas (9) of the mould support shells (6, 8) and the locking sleeves (17a, 17b) are designed and adjusted to each other such that the locking sleeves (17a, 17b) can be inserted telescopically one into the other when drawn off from the mould support shells (6, 8).

10. Blow mould according to claim 1, **characterized in that** a mould parting plane (E) between the mould parts (1, 2) is set either radially with respect to the blow rotor axis (Y) or obliquely at an angle with respect to a radial orientation in the or opposite to the blow rotor's sense of rotation, or preferably a linear arrangement is provided in an intermittently operated blow moulding machine (M).

11. Blow mould according to at least one of the preceding claims, **characterized in that** the mould support shells (6, 8) are arranged at a scissor-like flying mounting (15) with a bearing for opening and closing the mould which bearing can be relieved from forces of the blow moulding process via the slid-on locking sleeve (17), and that the mounting (15) is arranged either at the rear end of the mould support shells (6, 8), seen in the direction in which the locking sleeve (17) is slid on, or in case of locking sleeves (17a, 17b) to be slid on from opposite ends (10, 11), in a central region of the mould support shells (6, 8).

12. Blow mould according to claim 11, **characterized in that** one mould support shell (6), is floatingly held at the mounting (15), and that the bearing for opening and closing the mould is functionally connected with a closing motion drive (12), preferably a cam-controlled, hydraulic, pneumatic or motive motion drive (14), such that the mould parts (1, 2) can be closed without mutual contact to hold an intermediate distance (s) and can be brought to abutment with locking pressure only via a compensation element and/or the slid-on locking sleeve (17).

13. Blow mould according to at least one of the preceding claims, **characterized in that** the at least one slid-on locking sleeve (17, 17a, 17b) simultaneously provides the mould support function and the locking function of the blow mould (F).

14. Blow mould according to at least one of the preceding claims, **characterized in that** each mould support shell (6, 8) is united with one mould part (1, 2), preferably integrally formed with it.

## Revendications

1. Moule de soufflage (F) pour la fabrication de contenants moulés par soufflage ou étirage-soufflage à partir de préformes (P), dans une machine de moulage par soufflage (M) comprenant le cas échéant un rotor de soufflage (B) avec plusieurs moules de soufflage (F), le moule de soufflage (F) présentant au moins :
tout au moins deux parties de moule (1, 2, 4) définissant une cavité de moule (7) lorsque le moule de soufflage est fermé et verrouillé, des coques de support de moule (6, 8) renfermant les parties de moule (1, 2), un support de moule (T) pour le maintien des coques de support de moule (6, 8), des entraînements de mouvement de déplacement (12, 13, 15) pour ouvrir, fermer et verrouiller le moule de soufflage (F), et un dispositif de verrouillage (V) pouvant être déplacé, au moins dans la direction de l'axe de cavité de moule (X), par rapport aux coques de support de moule (6, 8), pour assurer le verrouillage du moule de soufflage (F) fermé et assurer le soutien des parties de moule (1, 2, 4) à l'encontre de forces résultant de l'opération de moulage par soufflage,
**caractérisé en ce que** le dispositif de verrouillage (V) comprend au moins une douille de verrouillage (17, 17a, 17b) à paroi intérieure conique (18), qui est fabriquée par utilisation de fibres de carbone et/ou de fibres d'aramide dans une matrice de matière plastique dans laquelle sont noyées les fibres, sous l'effet d'une pression et d'une température, par enroulement de fibres sans fin ou bien en un matériau de fibres sous forme tissée, et qui peut être emmanchée, avec la paroi intérieure conique (18), sur des zones de surface extérieures coniques (9) des coques de support de moule (6, 8), et soutient les parties de moule (1, 2) sur sensiblement la totalité de la hauteur (H) de la cavité de moule (7).

2. Moule de soufflage selon la revendication 1, **caractérisé en ce que** plus d'une seule douille de verrouillage (17a, 17b) peuvent être emmanchées à partir d'une extrémité (10 ou 11), ou bien à partir des extrémités opposées (10, 11) des coques de support de moule (6, 8), jusqu'à ce que les douilles de verrouillage (17a, 17b) se raccordent pratiquement mutuellement ou viennent buter les unes contre les autres ou bien se chevauchent partiellement.

3. Moule de soufflage selon l'une au moins des revendications précédentes, **caractérisé en ce que** la douille de verrouillage (17) est réalisée à double paroi sur la totalité de sa périphérie, une paroi (25) formant un élément de compensation (K) et/ou un élément de mise en température pour le moule de soufflage (F).

4. Moule de soufflage selon la revendication 3, **caractérisé en ce qu'**entre les parois (25, 26) de la douille de verrouillage (17), il est prévu une chambre de pression (28) remplie, ou pouvant être alimentée de l'extérieur, avec un fluide de compensation et/ou de mise en température comme de l'air comprimé, de l'huile ou de l'eau, de préférence avec un coussin de pression inséré, en un matériau élastique et/ou flexible.

5. Moule de soufflage selon l'une au moins des revendications précédentes, **caractérisé en ce que** dans au moins un creux (28') du côté extérieur d'au moins une coque de support de moule (6), il est prévu un coussin de pression sous la forme d'un sachet rempli d'un fluide de compensation, ou bien délimité par un joint d'étanchéité (31) s'appuyant contre la paroi intérieure (18) de la douille de verrouillage (17) emmanchée et pouvant être alimenté de l'extérieur avec un fluide de compensation.

6. Moule de soufflage selon l'une au moins des revendications précédentes, **caractérisé en ce que** la douille de verrouillage (17) fabriquée en utilisant des fibres de carbone, peut être chauffée électriquement et forme un élément de mise en température du moule et/ou forme, en raison d'un coefficient de dilatation thermique négatif, un élément de compensation (K) du moule de soufflage (F) verrouillé.

7. Moule de soufflage selon l'une au moins des revendications précédentes, **caractérisé en ce qu'**au moule de soufflage (F) est associée fonctionnellement une tige d'étirage (29) pouvant être déplacée linéairement dans et hors de la cavité de moule (7), et **en ce qu'**au moyen d'un entraînement de déplacement (30) de la tige d'étirage (29), il est également possible d'entrainer ladite au moins une douille de verrouillage (17, 17a) pouvant être emmanchée sur les coques de support de moule (6, 8) à partir de l'extrémité (10) dirigée vers la tige d'étirage (29).

8. Moule de soufflage selon la revendication 1, **caractérisé en ce que** l'entrainement de déplacement (13) de ladite au moins une douille de verrouillage (17) comprend un moteur linéaire électrique (14).

9. Moule de soufflage selon la revendication 2, **caractérisé en ce que** les zones de surface extérieure coniques (9) des coques de support de moule (6, 8) et les douilles de verrouillage (17a, 17b) sont configurées et adaptées réciproquement les unes aux autres de manière telle, que les douilles de verrouillage (17a, 17b) puissent être emboitées de manière télescopique les unes dans les autres lors de leur retrait des coques de support de moule (6, 8).

10. Moule de soufflage selon la revendication 1, **caractérisé en ce que** le plan de joint de moule (E) entre les parties de moule (1, 2) s'étend radialement à l'axe de rotor de soufflage (Y) ou de manière oblique, sous un certain angle, par rapport à une orientation radiale dans le sens de rotation ou à l'encontre du sens de rotation du rotor de soufflage, ou bien, de préférence, il est prévu, dans une machine de moulage par soufflage (M) fonctionnant de manière cyclique, un agencement linéaire.

11. Moule de soufflage selon l'une au moins des revendications précédentes, **caractérisé en ce que** les coques de support de moule (6, 8) sont agencées à la manière d'une cisaille sur une suspension flottante (15) comportant un palier pour l'ouverture de moule et la fermeture de moule, et pouvant être déchargée, par l'intermédiaire de la douille de verrouillage (17) emmanchée, de forces provenant de l'opération de moulage par soufflage, et **en ce que** la suspension (15) est agencée à l'extrémité (10) des coques de support de moule (6, 8), située à l'arrière dans la direction d'emmanchement de la douille de verrouillage (17), ou bien dans une zone médiane des coques de support de moule (6, 8) dans le cas de douilles de verrouillage (17a, 17b) pouvant être emmanchées à partir des extrémités opposées (10, 11).

12. Moule de soufflage selon la revendication 11, **caractérisé en ce qu'**une coque de support de moule (6) est montée flottante sur la suspension (15), et **en ce que** le palier, pour l'ouverture de moule et la fermeture de moule, est relié fonctionnellement à un entraînement de mouvement de fermeture (12), de préférence un entraînement de mouvement (14) commandé par came, hydraulique, pneumatique ou motorisé, de manière telle, que les parties de moule (1, 2) puissent être fermées, sans venir en butée réciproque, jusqu'à un interstice intermédiaire (s), et puissent être amenées seulement ensuite en butée réciproque avec une pression de fermeture, par l'intermédiaire d'un élément de compensation et/ou de la douille de verrouillage (17) emmanchée.

13. Moule de soufflage selon l'une au moins des revendications précédentes, **caractérisé en ce que** ladite au moins une douille de verrouillage (17, 17a, 17b) emmanchée assure simultanément la fonction de support de moule et la fonction de verrouillage du moule de soufflage (F) .

14. Moule de soufflage selon l'une au moins des revendications précédentes, **caractérisé en ce que** chaque coque de support de moule (6, 8) est réunifiée avec une partie de moule (1, 2), de préférence réalisée d'un seul tenant avec celle-ci.
